# EUROPEAN PATENT SPECIFICATION

(11) **EP 2 368 182 B1**
(45) Date of publication and mention of the grant of the patent: **01.01.2020**
(21) Application number: 09795594.2
(22) Date of filing: 19.11.2009
(51) Int. Cl.: G06F 9/455

(54) **SYSTEMS AND METHODS FOR FACILITATING MIGRATION OF VIRTUAL MACHINES AMONG A PLURALITY OF PHYSICAL MACHINES**
SYSTEM UND VERFAHREN UM DIE MIGRATION VIRTUELLER MASCHINEN INNERHALB EINER MEHRHEIT PHYSISCHER MASCHINEN ZU UNTERSTÜTZEN.
SYSTEME ET PROCEDE POUR AIDER A LA MIGRATION ENTRE PLUSIEURS MACHINES PHYSIQUES DE MACHINES VIRTUELLES.

(30) Priority: 19.12.2008 US 340057
(43) Date of publication of application: 28.09.2011
(73) Proprietor: Citrix Systems, Inc., Fort Lauderdale, FL 33309 (US)
(72) Inventor: SHARP, Richard William, Cambridge SL9 0DZ (GB); LUDLAM, Jonathan James, Cambridge SL9 0DZ (GB); HANQUEZ, Vincent, Cambridge SL9 0DZ (GB); SCOTT, David Jonathan, Cambridge SL9 0DZ (GB)
(74) Representative: Murgitroyd & Company
(86) International application number: PCT/US2009/065107
(87) International publication number: WO 2010/080214

(56) References cited:
- WO-A1-2007/136021
- WO-A2-2008/027768
- US-A1- 2007 180 436

## Description

This application claims priority to U.S. Patent Application serial number 12/340,057, filed on December 19, 2008.

### FIELD OF THE DISCLOSURE

This disclosure generally relates to systems and methods for migrating virtual machines. In particular, this disclosure relates to systems and methods for facilitating migration of virtual machines among a plurality of physical machines.

### BACKGROUND OF THE DISCLOSURE

In conventional computing environments implementing a hypervisor to execute a virtual machine on a host computing device, the hypervisor typically provides the virtual machine with access to hardware resources provided by the host computing device. The hypervisor may allocate physical resources from a pool of physical computing devices, which may include heterogeneous processors providing different levels of functionality. In some environments, a hypervisor may need to migrate a virtual machine from one physical computing device to a second physical computing device; for example, when the first physical computing device requires maintenance or no longer has the capacity to provide the virtual machine with the allocated hardware resources. In the event that the two physical computing devices provide different functionality - for example, the first physical computing device has access to a physical resource (for example, a network storage device or a physical disk) while the second physical computing device does not provide access to the physical resource - the migration of the virtual machine from the first physical computing device to the second may fail. For example, the virtual machine may execute a process requiring access to functionality provided by the first physical computing device but not by the second and a migration of the virtual machine may result in unanticipated execution errors or undesired termination of the virtual machine.

Conventional solutions to this problem typically involve providing homogeneous functionality in the pool of physical computing devices, for example, by excluding from the pool a physical computing device that provides access to a physical resource that is not universally accessible by each of the physical computing devices in the pool, or by disabling access to the physical resource. However, this approach typically limits an administrator's ability to provide a diverse range of functionality for users. Furthermore, as physical resources age and require replacement, administrators may not be able to find replacement devices that provide identical functionality.

US2007/180436-A1 discloses a network and method for performing live migration of a virtual machine (VM) executing at a source site to at least one destination site over an optical network. An application program executes on the VM on behalf of a client system. In the event of a VM migration, a virtual machine turntable control agent coordinates the resource allocation with the VM data transfer. One or more lightpaths are dynamically and securely established through the optical network between the source site and the destination site(s). The VM migration from the source site to multiple destination sites occurs simultaneously, while the application program executes on the VM. After the VM migration, the application resumes at the destination site(s).

WO2008/027768-A2 discloses a platform, method, and computer program product that provide virtual machine technology within a processing platform. A computing platform automatically deploys one or more servers in response to receiving corresponding server specifications. Each server specification identifies a server application that a corresponding server should execute and defines communication network and storage network connectivity for the server. The platform includes a plurality of processor nodes and virtual machine hypervisor. The virtual machine hypervisor logic has logic for instantiating and controlling the execution of one or more guest virtual machines on a computer processor. In response to interpreting the server specification, control software deploys computer processors or guest virtual machines to execute the identified server application and automatically configures the defined communication network and storage network connectivity to the selected computer processors or guest virtual machines to thereby deploy the server defined in the server specification.

WO2007/136021-A1 discloses a virtual machine management apparatus connected to a plurality of server devices via a network that generates a new virtual machine on a server device in accordance with a request from a management terminal. At that time, for one or more server devices to which a new virtual machine can be allocated, the virtual machine management apparatus refers to an allocation rule table for storing a score for each of combinations of types of virtual machines. The score indicates appropriateness of a condition that each combination of types of virtual machines is to be allocated to the same server device. Thus, the virtual machine management apparatus computes an index value indicative of appropriateness of a condition that the new virtual machine is to be allocated to the server device. Then the virtual machine management apparatus determines an allocation target for the new virtual machine with reference to the computed index value.

### BRIEF SUMMARY OF THE DISCLOSURE

The present invention provides a method and a system for facilitating migration of virtual machines among a plurality of physical machines, as defined by the claims appended hereto.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1A is a block diagram depicting an embodiment of a computing environment comprising a hypervisor layer, a virtualization layer, and a hardware layer;
FIGs. 1B and 1C are block diagrams depicting embodiments of computing devices useful in connection with the methods and systems described herein;
FIG. 2 is a block diagram depicting an embodiment of a system for facilitating migration of virtual machines among a plurality of physical machines;
FIG. 3 is a flow diagram depicting an embodiment of a method for facilitating migration of virtual machines among a plurality of physical machines; and

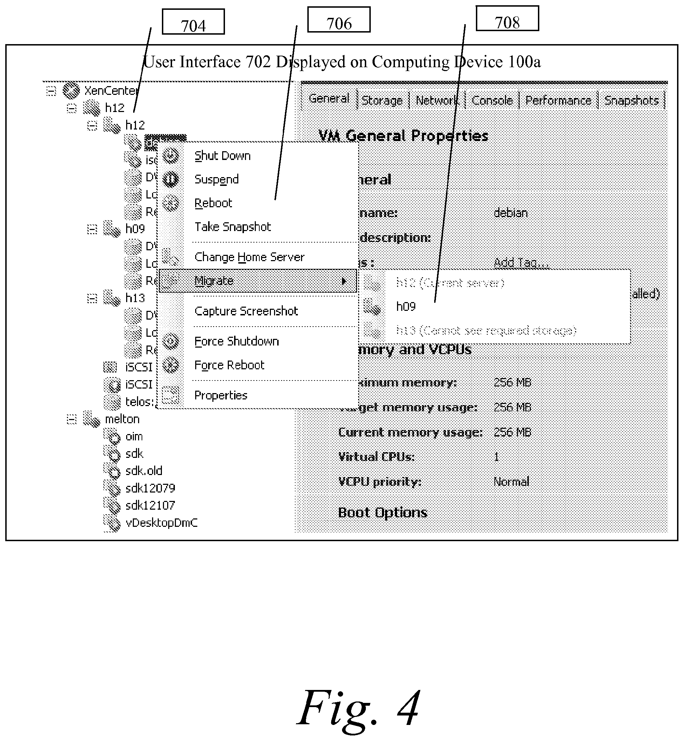

FIG. 4 is a screen shot depicting an embodiment of a user interface provided by a system for facilitating migration of virtual machines among a plurality of physical machines.

### DETAILED DESCRIPTION

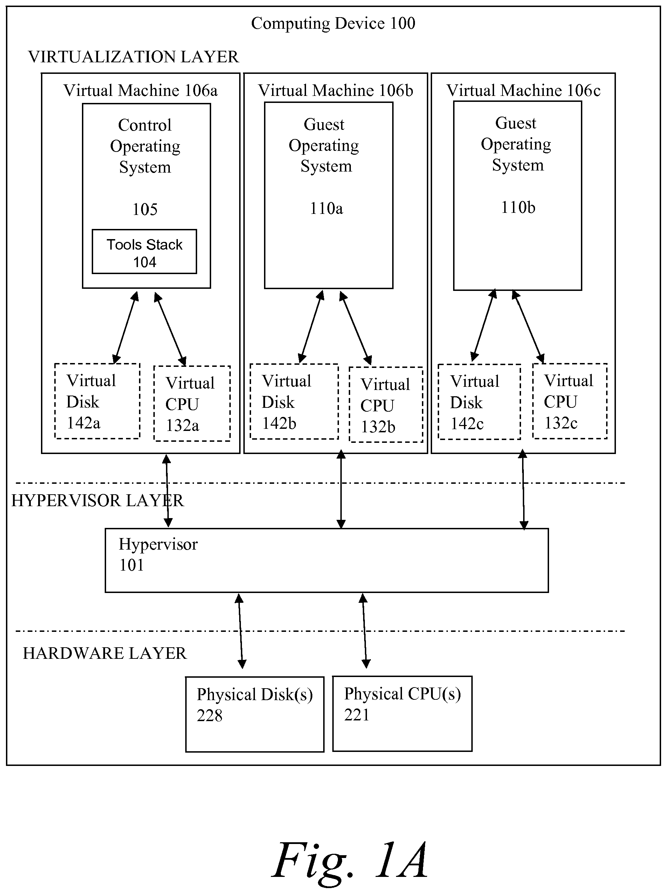

Referring now to FIG. 1A, a block diagram depicts one embodiment of a virtualization environment. In brief overview, a computing device 100 includes a hypervisor layer, a virtualization layer, and a hardware layer. The hypervisor layer includes a hypervisor 101 (also referred to as a virtualization manager) that allocates and manages access to a number of physical resources in the hardware layer (e.g., the processor(s) 221, and disk(s) 228) by at least one virtual machine executing in the virtualization layer. The virtualization layer includes at least one operating system 110 and a plurality of virtual resources allocated to the at least one operating system 110. Virtual resources may include, without limitation, a plurality of virtual processors 132a, 132b, 132c (generally 132), and virtual disks 142a, 142b, 142c (generally 142), as well as virtual resources such as virtual memory and virtual network interfaces. The plurality of virtual resources and the operating system 110 may be referred to as a virtual machine 106. A virtual machine 106 may include a control operating system 105 in communication with the hypervisor 101 and used to execute applications for managing and configuring other virtual machines on the computing device 100.

Referring now to FIG. 1A, and in greater detail, a hypervisor 101 may provide virtual resources to an operating system in any manner which simulates the operating system having access to a physical device. A hypervisor 101 may provide virtual resources to any number of guest operating systems 110a, 110b (generally 110). In some embodiments, a computing device 100 executes one or more types of hypervisors. In these embodiments, hypervisors may be used to emulate virtual hardware, partition physical hardware, virtualize physical hardware, and execute virtual machines that provide access to computing environments. Hypervisors may include those manufactured by VMWare, Inc., of Palo Alto, California; the XEN hypervisor, an open source product whose development is overseen by the open source Xen.org community; HyperV, VirtualServer or virtual PC hypervisors provided by Microsoft, or others. In some embodiments, a computing device 100 executing a hypervisor which creates a virtual machine platform on which guest operating systems may execute is referred to as a host server. In one of these embodiments, for example, the computing device 100 is a XEN SERVER provided by Citrix Systems, Inc., of Fort Lauderdale, FL.

In some embodiments, a hypervisor 101 executes within an operating system executing on a computing device. In one of these embodiments, a computing device executing an operating system and a hypervisor 101 may be said to have a host operating system (the operating system executing on the computing device), and a guest operating system (an operating system executing within a computing resource partition provided by the hypervisor 101). In other embodiments, a hypervisor 101 interacts directly with hardware on a computing device, instead of executing on a host operating system. In one of these embodiments, the hypervisor 101 may be said to be executing on "bare metal," referring to the hardware comprising the computing device.

In some embodiments, a hypervisor 101 may create a virtual machine 106a-c (generally 106) in which an operating system 110 executes. In one of these embodiments, for example, the hypervisor 101 loads a virtual machine image to create a virtual machine 106. In another of these embodiments, the hypervisor 101 executes an operating system 110 within the virtual machine 106. In still another of these embodiments, the virtual machine 106 executes an operating system 110.

In some embodiments, the hypervisor 101 controls processor scheduling and memory partitioning for a virtual machine 106 executing on the computing device 100. In one of these embodiments, the hypervisor 101 controls the execution of at least one virtual machine 106. In another of these embodiments, the hypervisor 101 presents at least one virtual machine 106 with an abstraction of at least one hardware resource provided by the computing device 100. In other embodiments, the hypervisor 101 controls whether and how physical processor capabilities are presented to the virtual machine 106.

A control operating system 105 may execute at least one application for managing and configuring the guest operating systems. In one embodiment, the control operating system 105 may execute an administrative application, such as an application including a user interface providing administrators with access to functionality for managing the execution of a virtual machine, including functionality for executing a virtual machine, terminating an execution of a virtual machine, or identifying a type of physical resource for allocation to the virtual machine. In another embodiment, the hypervisor 101 executes the control operating system 105 within a virtual machine 106 created by the hypervisor 101. In still another embodiment, the control operating system 105 executes in a virtual machine 106 that is authorized to directly access physical resources on the computing device 100. In some embodiments, a control operating system 105a on a computing device 100a may exchange data with a control operating system 105b on a computing device 100b, via communications between a hypervisor 101a and a hypervisor 101b. In this way, one or more computing devices 100 may exchange data with one or more of the other computing devices 100 regarding processors and other physical resources available in a pool of resources. In one of these embodiments, this functionality allows a hypervisor to manage a pool of resources distributed across a plurality of physical computing devices. In another of these embodiments, multiple hypervisors manage one or more of the guest operating systems executed on one of the computing devices 100.

In one embodiment, the control operating system 105 executes in a virtual machine 106 that is authorized to interact with at least one guest operating system 110. In another embodiment, a guest operating system 110 communicates with the control operating system 105 via the hypervisor 101 in order to request access to a disk or a network. In still another embodiment, the guest operating system 110 and the control operating system 105 may communicate via a communication channel established by the hypervisor 101, such as, for example, via a plurality of shared memory pages made available by the hypervisor 101.

In some embodiments, the control operating system 105 includes a network back-end driver for communicating directly with networking hardware provided by the computing device 100. In one of these embodiments, the network back-end driver processes at least one virtual machine request from at least one guest operating system 110. In other embodiments, the control operating system 105 includes a block back-end driver for communicating with a storage element on the computing device 100. In one of these embodiments, the block back-end driver reads and writes data from the storage element based upon at least one request received from a guest operating system 110.

In one embodiment, the control operating system 105 includes a tools stack 104. In another embodiment, a tools stack 104 provides functionality for interacting with the hypervisor 101, communicating with other control operating systems 105 (for example, on a second computing device 100b), or managing virtual machines 106b, 106c on the computing device 100. In another embodiment, the tools stack 104 includes customized applications for providing improved management functionality to an administrator of a virtual machine farm. In some embodiments, at least one of the tools stack 104 and the control operating system 105 include a management API that provides an interface for remotely configuring and controlling virtual machines 106 running on a computing device 100. In other embodiments, the control operating system 105 communicates with the hypervisor 101 through the tools stack 104.

In one embodiment, the hypervisor 101 executes a guest operating system 110 within a virtual machine 106 created by the hypervisor 101. In another embodiment, the guest operating system 110 provides a user of the computing device 100 with access to resources within a computing environment. In still another embodiment, a resource includes a program, an application, a document, a file, a plurality of applications, a plurality of files, an executable program file, a desktop environment, a computing environment, or other resource made available to a user of the computing device 100. In yet another embodiment, the resource may be delivered to the computing device 100 via a plurality of access methods including, but not limited to, conventional installation directly on the computing device 100, delivery to the computing device 100 via a method for application streaming, delivery to the computing device 100 of output data generated by an execution of the resource on a second computing device 100' and communicated to the computing device 100 via a presentation layer protocol, delivery to the computing device 100 of output data generated by an execution of the resource via a virtual machine executing on a second computing device 100', or execution from a removable storage device connected to the computing device 100, such as a USB device, or via a virtual machine executing on the computing device 100 and generating output data. In some embodiments, the computing device 100 transmits output data generated by the execution of the resource to another computing device 100'.

In one embodiment, the guest operating system 110, in conjunction with the virtual machine on which it executes, forms a fully-virtualized virtual machine which is not aware that it is a virtual machine; such a machine may be referred to as a "Domain U HVM (Hardware Virtual Machine) virtual machine". In another embodiment, a fully-virtualized machine includes software emulating a Basic Input/Output System (BIOS) in order to execute an operating system within the fully-virtualized machine. In still another embodiment, a fully-virtualized machine may include a driver that provides functionality by communicating with the hypervisor 101; in such an embodiment, the driver is typically aware that it executes within a virtualized environment.

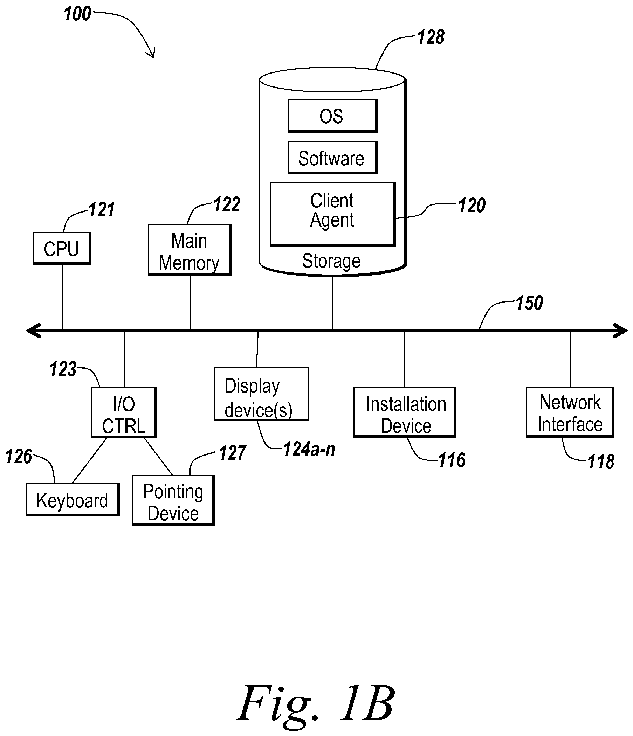

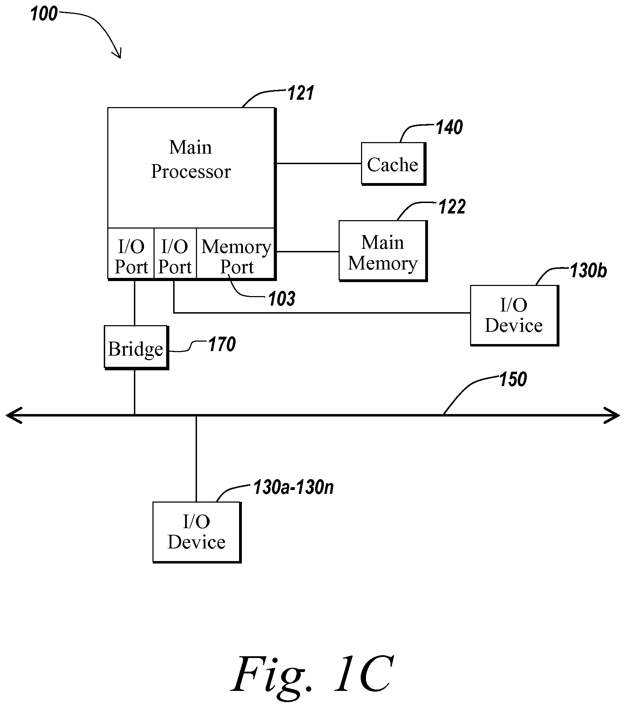

In another embodiment, the guest operating system 110, in conjunction with the virtual machine on which it executes, forms a paravirtualized virtual machine, which is aware that it is a virtual machine; such a machine may be referred to as a "Domain U PV virtual machine". In another embodiment, a paravirtualized machine includes additional drivers that a fully-virtualized machine does not include. In still another embodiment, the paravirtualized machine includes the network back-end driver and the block back-end driver included in a control operating system 105, as described above
The computing device 100 may be deployed as and/or executed on any type and form of computing device, such as a computer, network device or appliance capable of communicating on any type and form of network and performing the operations described herein. FIGs. 1B and 1C depict block diagrams of a computing device 100 useful for practicing an embodiment of methods and systems described herein. As shown in FIGs. IB and 1C, a computing device 100 includes a central processing unit 121, and a main memory unit 122. As shown in FIG. 1B, a computing device 100 may include a storage device 128, an installation device 116, a network interface 118, an I/O controller 123, display devices 124a-124n, a keyboard 126 and a pointing device 127, such as a mouse. The storage device 128 may include, without limitation, an operating system, software, and a client agent 120. As shown in FIG. 1C, each computing device 100 may also include additional optional elements, such as a memory port 103, a bridge 170, one or more input/output devices 130a-130n (generally referred to using reference numeral 130), and a cache memory 140 in communication with the central processing unit 121.

The central processing unit 121 is any logic circuitry that responds to and processes instructions fetched from the main memory unit 122. In some embodiments, the central processing unit 121 is provided by a microprocessor unit, such as: those manufactured by Intel Corporation of Mountain View, California; those manufactured by Motorola Corporation of Schaumburg, Illinois; those manufactured by Transmeta Corporation of Santa Clara, California; the RS/6000 processor, those manufactured by International Business Machines of White Plains, New York; or those manufactured by Advanced Micro Devices of Sunnyvale, California. The computing device 100 may be based on any of these processors, or any other processor capable of operating as described herein.

Main memory unit 122 may be one or more memory chips capable of storing data and allowing any storage location to be directly accessed by the microprocessor 121, such as Static random access memory (SRAM), Burst SRAM or SynchBurst SRAM (BSRAM), Dynamic random access memory (DRAM), Fast Page Mode DRAM (FPM DRAM), Enhanced DRAM (EDRAM), Extended Data Output DRAM (EDO DRAM), Burst Extended Data Output DRAM (BEDO DRAM), synchronous DRAM (SDRAM), JEDEC SRAM, PC100 SDRAM, Double Data Rate SDRAM (DDR SDRAM), Enhanced SDRAM (ESDRAM), SyncLink DRAM (SLDRAM), Direct Rambus DRAM (DRDRAM), or Ferroelectric RAM (FRAM). The main memory 122 may be based on any of the above described memory chips, or any other available memory chips capable of operating as described herein. In the embodiment shown in FIG. 1B, the processor 121 communicates with main memory 122 via a system bus 150 (described in more detail below). FIG. 1C depicts an embodiment of a computing device 100 in which the processor communicates directly with main memory 122 via a memory port 103. For example, in FIG. 1C the main memory 122 may be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory 122 and is typically provided by SRAM, BSRAM, or EDRAM. In the embodiment shown in FIG. 1C, the processor 121 communicates with various I/O devices 130 via a local system bus 150. Various buses may be used to connect the central processing unit 121 to any of the I/O devices 130, including a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 may use an Advanced Graphics Port (AGP) to communicate with a display device 124. FIG. 1C depicts an embodiment of a computer 100 in which the main processor 121 communicates directly with I/O device 130b via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n may be present in the computing device 100. Input devices include keyboards, mice, trackpads, trackballs, microphones, dials, and drawing tablets. Output devices include video displays, speakers, inkjet printers, laser printers, and dye-sublimation printers. The I/O devices may be controlled by an I/O controller 123 as shown in FIG. IB. The I/O controller may control one or more I/O devices such as a keyboard 126 and a pointing device 127, e.g., a mouse or optical pen. Furthermore, an I/O device may also provide storage and/or an installation medium 116 for the computing device 100. In still other embodiments, the computing device 100 may provide USB connections (not shown) to receive handheld USB storage devices such as the USB Flash Drive line of devices manufactured by Twintech Industry, Inc., of Los Alamitos, California.

Referring again to FIG. 1B, the computing device 100 may support any suitable installation device 116, such as a floppy disk drive for receiving floppy disks such as 3.5-inch, 5.25-inch disks or ZIP disks, a CD-ROM drive, a CD-R/RW drive, a DVD-ROM drive, a flash memory drive, tape drives of various formats, USB device, hard-drive or any other device suitable for installing software and programs. The computing device 100 may further comprise a storage device, such as one or more hard disk drives or redundant arrays of independent disks, for storing an operating system and other related software, and for storing application software programs such as any program related to the client agent 120. Optionally, any of the installation devices 116 could also be used as the storage device. Additionally, the operating system and the software can be run from a bootable medium, for example, a bootable CD, such as KNOPPIX, a bootable CD for GNU/Linux that is available as a GNU/Linux distribution from knoppix.net.

Furthermore, the computing device 100 may include a network interface 118 to interface to the network 104 through a variety of connections including, but not limited to, standard telephone lines, LAN or WAN links (*e.g*., 802.11, T1, T3, 56kb, X.25, SNA, DECNET), broadband connections (*e.g*., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS), or the Citrix Gateway Protocol manufactured by Citrix Systems, Inc. of Ft. Lauderdale, Florida. The network interface 118 may comprise a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 may comprise or be connected to multiple display devices 124a-124n, which each may be of the same or different type and/or form. As such, any of the I/O devices 130a-130n and/or the I/O controller 123 may comprise any type and/or form of suitable hardware, software, or combination of hardware and software to support, enable or provide for the connection and use of multiple display devices 124a-124n by the computing device 100. For example, the computing device 100 may include any type and/or form of video adapter, video card, driver, and/or library to interface, communicate, connect or otherwise use the display devices 124a-124n. In one embodiment, a video adapter may comprise multiple connectors to interface to multiple display devices 124a-124n. In other embodiments, the computing device 100 may include multiple video adapters, with each video adapter connected to one or more of the display devices 124a-124n. In some embodiments, any portion of the operating system of the computing device 100 may be configured for using multiple displays 124a-124n. In other embodiments, one or more of the display devices 124a-124n may be provided by one or more other computing devices, such as computing devices 100a and 100b connected to the computing device 100, for example, via a network. These embodiments may include any type of software designed and constructed to use another computer's display device as a second display device 124a for the computing device 100. One ordinarily skilled in the art will recognize and appreciate the various ways and embodiments that a computing device 100 may be configured to have multiple display devices 124a-124n.

In further embodiments, an I/O device 130 may be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a HIPPI bus, a Super HIPPI bus, a SerialPlus bus, a SCI/LAMP bus, a FibreChannel bus, a Serial Attached small computer system interface bus, or a HDMI bus.

A computing device 100 of the sort depicted in FIGs. 1B and 1C typically operates under the control of operating systems, which control scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: WINDOWS 3.x, WINDOWS 95, WINDOWS 98, WINDOWS 2000, WINDOWS NT 3.51, WINDOWS NT 4.0, WINDOWS CE, WINDOWS MOBILE, WINDOWS XP, and WINDOWS VISTA, all of which are manufactured by Microsoft Corporation of Redmond, Washington; MAC OS, manufactured by Apple Computer of Cupertino, California; OS/2, manufactured by International Business Machines of Armonk, New York; and Linux, a freely-available operating system distributed by Caldera Corp. of Salt Lake City, Utah, or any type and/or form of a Unix operating system, among others.

The computer system 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. The computer system 100 has sufficient processor power and memory capacity to perform the operations described herein. For example, the computer system 100 may comprise a device of the IPOD family of devices manufactured by Apple Computer of Cupertino, California, a PLAYSTATION 2, PLAYSTATION 3, or PERSONAL PLAYSTATION PORTABLE (PSP) device manufactured by the Sony Corporation of Tokyo, Japan, a NINTENDO DS, NINTENDO GAMEBOY, NINTENDO GAMEBOY ADVANCED or NINTENDO REVOLUTION device manufactured by Nintendo Co., Ltd., of Kyoto, Japan, or an XBOX or XBOX 360 device manufactured by the Microsoft Corporation of Redmond, Washington.

In some embodiments, the computing device 100 may have different processors, operating systems, and input devices consistent with the device. For example, in one embodiment, the computing device 100 is a TREO 180, 270, 600, 650, 680, 700p, 700w, or 750 smart phone manufactured by Palm, Inc. In some of these embodiments, the TREO smart phone is operated under the control of the PalmOS operating system and includes a stylus input device as well as a five-way navigator device.

In other embodiments, the computing device 200 is a mobile device, such as a JAVA-enabled cellular telephone or personal digital assistant (PDA), such as the i55sr, i58sr, i85s, i88s, i90c, i95cl, i335, i365, i570, I576, i580, i615, i760, i836, i850, i870, i880, i920, i930, ic502, ic602, ic902, i776 or the im1100, all of which are manufactured by Motorola Corp. of Schaumburg, Illinois, the 6035 or the 7135, manufactured by Kyocera of Kyoto, Japan, or the i300 or i330, manufactured by Samsung Electronics Co., Ltd., of Seoul, Korea. In some embodiments, the computer system 200 is a mobile device manufactured by Nokia of Finland, or by Sony Ericsson Mobile Communications AB of Lund, Sweden.

In still other embodiments, the computing device 100 is a Blackberry handheld or smart phone, such as the devices manufactured by Research In Motion Limited, including the Blackberry 7100 series, 8700 series, 7700 series, 7200 series, the Blackberry 7520, the Blackberry PEARL 8100, the 8700 series, the 8800 series, the Blackberry Storm, Blackberry Bold, Blackberry Curve 8900, Blackberry Pearl Flip. In yet other embodiments, the computing device 100 is a smart phone, Pocket PC, Pocket PC Phone, or other handheld mobile device supporting Microsoft Windows Mobile Software. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

In some embodiments, the computing device 100 is a digital audio player. In one of these embodiments, the computing device 100 is a digital audio player such as the Apple IPOD, IPOD Touch, IPOD NANO, and IPOD SHUFFLE lines of devices, manufactured by Apple Computer of Cupertino, California. In another of these embodiments, the digital audio player may function as both a portable media player and as a mass storage device. In other embodiments, the computing device 100 is a digital audio player such as the DigitalAudioPlayer Select MP3 players, manufactured by Samsung Electronics America, of Ridgefield Park, NJ, or the Motorola m500 or m25 Digital Audio Players, manufactured by Motorola Inc. of Schaumburg, IL. In still other embodiments, the computing device 100 is a portable media player, such as the ZEN VISION W, the ZEN VISION series, the ZEN PORTABLE MEDIA CENTER devices, or the Digital MP3 line of MP3 players, manufactured by Creative Technologies Ltd. In yet other embodiments, the computing device 100 is a portable media player or digital audio player supporting file formats including, but not limited to, MP3, WAV, M4A/AAC, WMA Protected AAC, AIFF, Audible audiobook, Apple Lossless audio file formats and .mov, .m4v, and .mp4 MPEG-4 (H.264/MPEG-4 AVC) video file formats.

In some embodiments, the computing device 100 includes a combination of devices, such as a mobile phone combined with a digital audio player or portable media player. In one of these embodiments, the computing device 100 is a smartphone, for example, an iPhone manufactured by Apple, Inc., or a Blackberry device, manufactured by Research In Motion Limited. In yet another embodiment, the computing device 100 is a laptop or desktop computer equipped with a web browser and a microphone and speaker system, such as a telephony headset. In these embodiments, the computing devices 100 are web-enabled and can receive and initiate phone calls. In other embodiments, the communications device 100 is a Motorola RAZR or Motorola ROKR line of combination digital audio players and mobile phones.

A computing device 100 may be a file server, application server, web server, proxy server, appliance, network appliance, gateway, application gateway, gateway server, virtualization server, deployment server, SSL VPN server, or firewall. In some embodiments, a computing device 100 provides a remote authentication dial-in user service, and is referred to as a RADIUS server. In other embodiments, a computing device 100 may have the capacity to function as either an application server or as a master application server. In still other embodiments, a computing device 100 is a blade server.

In one embodiment, a computing device 100 may include an Active Directory. The computing device 100 may be an application acceleration appliance. For embodiments in which the computing device 100 is an application acceleration appliance, the computing device 100 may provide functionality including firewall functionality, application firewall functionality, or load balancing functionality. In some embodiments, the computing device 100 comprises an appliance such as one of the line of appliances manufactured by the Citrix Application Networking Group, of San Jose, CA, or Silver Peak Systems, Inc., of Mountain View, CA, or of Riverbed Technology, Inc., of San Francisco, CA, or of F5 Networks, Inc., of Seattle, WA, or of Juniper Networks, Inc., of Sunnyvale, CA.

In other embodiments, a computing device 100 may be referred to as a client node, a client machine, an endpoint node, or an endpoint. In some embodiments, a client 100 has the capacity to function as both a client node seeking access to resources provided by a server and as a server node providing access to hosted resources for other clients.

In some embodiments, a first, client computing device 100a communicates with a second, server computing device 100b. In one embodiment, the client communicates with one of the computing devices 100 in a server farm. Over the network, the client can, for example, request execution of various applications hosted by the computing devices 100 in the server farm and receive output data of the results of the application execution for display. In one embodiment, the client executes a program neighborhood application to communicate with a computing device 100 in a server farm.

A computing device 100 may execute, operate or otherwise provide an application, which can be any type and/or form of software, program, or executable instructions such as any type and/or form of web browser, web-based client, client-server application, a thin-client computing client, an ActiveX control, or a Java applet, or any other type and/or form of executable instructions capable of executing on the computing device 100. In some embodiments, the application may be a server-based or a remote-based application executed on behalf of a user of a first computing device by a second computing device. In other embodiments, the second computing device may display output data to the first, client computing device using any thin-client or remote-display protocol, such as the Independent Computing Architecture (ICA) protocol manufactured by Citrix Systems, Inc. of Ft. Lauderdale, Florida; the Remote Desktop Protocol (RDP) manufactured by the Microsoft Corporation of Redmond, Washington; the X11 protocol; the Virtual Network Computing (VNC) protocol, manufactured by AT&T Bell Labs; the SPICE protocol, manufactured by Qumranet, Inc., of Sunnyvale, CA, USA, and of Raanana, Israel; the Net2Display protocol, manufactured by VESA, of Milpitas, CA; the PC-over-IP protocol, manufactured by Teradici Corporation, of Burnaby, B.C.; the TCX protocol, manufactured by Wyse Technology, Inc., of San Jose, CA; the THINC protocol developed by Columbia University in the City of New York, of New York, NY; or the Virtual-D protocols manufactured by Desktone, Inc., of Chelmsford, MA. The application can use any type of protocol and it can be, for example, an HTTP client, an FTP client, an Oscar client, or a Telnet client. In other embodiments, the application comprises any type of software related to voice over internet protocol (VoIP) communications, such as a soft IP telephone. In further embodiments, the application comprises any application related to real-time data communications, such as applications for streaming video and/or audio.

In some embodiments, a first computing device 100a executes an application on behalf of a user of a client computing device 100b. In other embodiments, a computing device 100a executes a virtual machine, which provides an execution session within which applications execute on behalf of a user or a client computing devices 100b. In one of these embodiments, the execution session is a hosted desktop session. In another of these embodiments, the computing device 100 executes a terminal services session. The terminal services session may provide a hosted desktop environment. In still another of these embodiments, the execution session provides access to a computing environment, which may comprise one or more of: an application, a plurality of applications, a desktop application, and a desktop session in which one or more applications may execute.

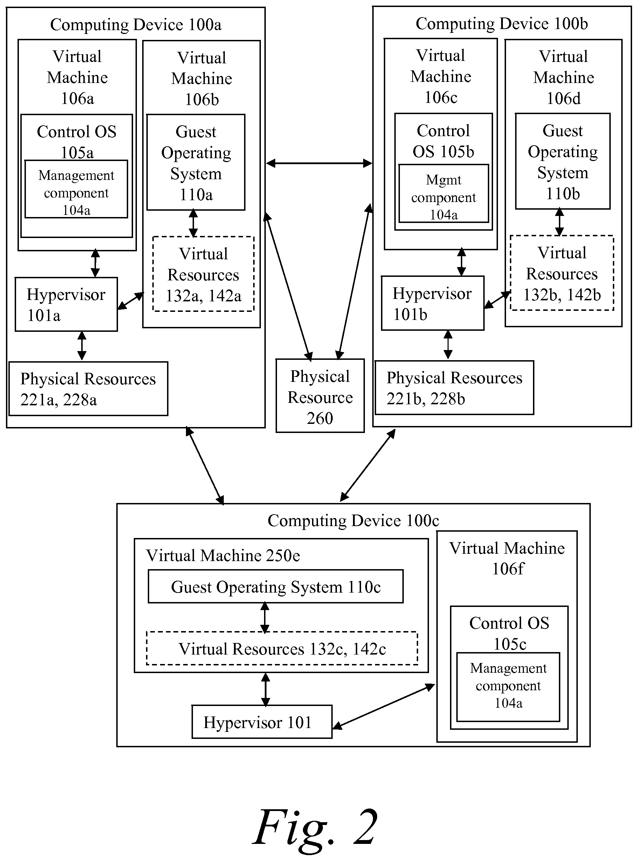

Referring now to FIG. 2, a block diagram depicts one embodiment of a system for facilitating migration of virtual machines among a plurality of physical machines. In brief overview, the system includes a management component 104 and a hypervisor 101. The system includes a plurality of computing devices 100, a plurality of virtual machines 106, a plurality of hypervisors 101, a plurality of management components referred to as tools stacks 104, and a physical resource 260. The plurality of physical machines 100 may each be provided as computing devices 100, described above in connection with FIGs. 1A-C.

Referring now to FIG. 2, and in greater detail, the management component associates a virtual machine with at least one physical resource inaccessible by a first subset of the plurality of physical machines and available to a second subset of the plurality of physical machines, the virtual machine executing on a first physical machine in the second subset of the plurality of physical machines. The management component receives a request to migrate the virtual machine to a second physical machine in the plurality of physical machines. The management component identifies a second physical machine in the second subset of the plurality of physical machines.

In one embodiment, the computing device 100a, the computing device 100b, and the computing device 100c are part of the plurality of physical machines. In another embodiment, the computing device 100c is in the first subset of the plurality of physical machines because it does not have access to physical resource 260. In still another embodiment, the computing devices 100a and 100b are part of the second subset of the plurality of physical machines because they each have access to the physical resource 260.

In one embodiment, the physical resource 260 resides in a computing device; for example, the physical resource 260 may be physical memory provided by a computing device 100d or a database or application provided by a computing device 100d. In another embodiment, the physical resource 260 is a computing device; for example, the physical resource 260 may be a network storage device or an application server. In still another embodiment, the physical resource 260 is a network of computing devices; for example, the physical resource 260 may be a storage area network.

In one embodiment, the management component is referred to as a tools stack 104a. In another embodiment, a management operating system 105 a, which may be referred to as a control operating system 105a, includes the management component. In some embodiments, the management component is referred to as a tools stack. In one of these embodiments, the management component is the tools stack 104 described above in connection with FIGs. 1A-1C.

In one embodiment, the management component 104 provides a user interface for receiving information from a user, such as an administrator, identifying a type of physical resource 260 to which the virtual machine 106 requests or requires access. In another embodiment, the management component 104 provides a user interface for receiving from a user, such as an administrator, the request for migration of a virtual machine 106b. In still another embodiment, the management component 104 accesses a database associating an identification of at least one virtual machine with an identification of at least one physical resource available to, requested by, or required by the identified virtual machine 106.

The hypervisor 101a executes on a computing device 100a. The hypervisor 101 migrates the virtual machine 250 to the physical machine 100b. In one embodiment, the hypervisor 101a receives, from the management component 104a, an identification of a second computing device 100b and a command to migrate the virtual machine 106b to the identified second computing device.

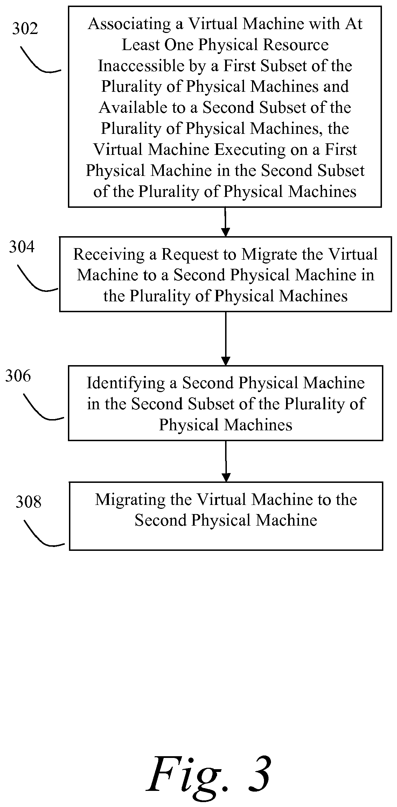

Referring now to FIG. 3, a flow diagram depicts one embodiment of a method for facilitating migration of virtual machines among a plurality of physical machines. In brief overview, the method includes associating a virtual machine with at least one physical resource inaccessible by a first subset of the plurality of physical machines and available to a second subset of the plurality of physical machines, the virtual machine executing on a first physical machine in the second subset of the plurality of physical machines (302). The method includes receiving a request to migrate the virtual machine to a second physical machine in the plurality of physical machines (304). The method includes identifying a second physical machine in the second subset of the plurality of physical machines (306). The method includes migrating the virtual machine to the second physical machine (308). In some embodiments, computer readable media having executable code for facilitating migration of virtual machines among a plurality of physical machines are provided.

Referring now to FIG. 3, and in greater detail, a management component associates a virtual machine with at least one physical resource inaccessible by a first subset of the plurality of physical machines and available to a second subset of the plurality of physical machines, the virtual machine executing on a first physical machine in the second subset of the plurality of physical machines (302). In one embodiment, the management component 104 receives, via a user interface, an identification of a physical resource 260 to which the virtual machine 106b requests or requires access; for example, an administrator may configure a virtual machine via the user interface and include an identification of the physical resource 260 in a configuration file. In another embodiment, the management component 104 receives an identification of a service the virtual machine 106b will provide and the management component 104 identifies a physical resource 260 to which the virtual machine 106b will need access.

The management component receives a request to migrate the virtual machine to a second physical machine in the plurality of physical machines (304). In one embodiment, the management component 104 receives the request from an administrator via a user interface provided by the control operating system 105 in which the management component 104 executes. In another embodiment, the management component 104 receives an identification of a migration event upon which it should automatically migrate the virtual machine; for example, an administrator may identify a maintenance schedule for a first physical machine 100a executing the virtual machine 106b (times for installing software updates or performing virus scans or executing other administrative tasks) and direct the management component 104 to migrate the virtual machine 106b to another physical machine 100 in the plurality of physical machines before a maintenance event.

In one embodiment, the management component 104 receives a request that does not specify a destination physical computing device; for example, an administrator may indicate that the virtual machine 106b should migrate to any of the plurality of physical machines rather than specifying that the virtual machine 106b should migrate to the computing device 100b. In another embodiment, the management component 104 identifies a physical computing device 100b that provides access to any physical resources 260 to which the virtual machine 106b needs access.

In one embodiment, the management component 104 receives a request to migrate the virtual machine to a specific destination physical computing device; for example, an administrator may select a computing device 100b or 100c and direct the management component 104 to migrate the virtual machine 106b to the selected computing device. In another embodiment, the management component 104 verifies that the administrator has selected a computing device 100 that provides access to each of the physical resources to which the virtual machine 106b requires access. In some embodiments, the management component 104 determines that the administrator has selected a computing device 100c that does not provide access to a physical resource 260 required by the virtual machine 106b. In one of these embodiments, the management component 104 denies the request to migrate the virtual machine. In such an embodiment, the management component 104 may provide an identification of the physical resource that the computing device 100c fails to provide. In another of these embodiments, the management component 104 identifies an alternate computing device 100b that does provide access to the physical resource 260. In this embodiment, the management component 104 may request permission to migrate the virtual machine 106b to the identified computing device 100b; alternatively, the management component 104 may automatically migrate the virtual machine to the identified physical machine and transmit an identification of the migration. In still another embodiment, the management component 104 confirms the ability of the identified physical computing device to provide access to the physical resource 260.

In one embodiment, the request identifies a virtual machine associated with at least one physical resource having a processor type. In another embodiment, the request specifies identifies a virtual machine associated with at least one network storage device. In still another embodiment, the request identifies a virtual machine associated with network. In yet another embodiment, the request identifies a virtual machine associated with a plurality of resources. In some embodiments, the management component 104 identifies a physical resource 260 based upon the identification of the virtual machine 106b.

The management component identifies a second physical machine in the second subset of the plurality of physical machines (306). As indicated above, in some embodiments, the management component 104 receives an identification of a specific physical machine 100b to which to migrate the virtual machine 106b. In one of these embodiments, the management component 104 confirms the ability of the physical machine 100b to provide the physical resources 260 expected by the virtual machine 106b. In another of these embodiments, the management component 104 identifies an alternative to the specified physical machine 100c. In other embodiments, the management component 104 does not receive an identification of the physical machine 100b and identifies the physical machine 100b responsive to data included in the request and data associated with the virtual machine 106b. In further embodiments, the management component 104 identifies the physical machine 100b by accessing an association between the virtual machine 106b and a physical resource 260 and an association between the physical resource 260 and a physical machine 100b.

In some embodiments, and by way of example, a virtual machine configuration object may include an identification of at least one associated virtual block device (VBD) object. In one of these embodiments, a VBD object defines a disk device that will appear inside the virtual machine 106b when booted (and that will therefore be accessible to applications running inside the virtual machine 106b). In another of these embodiments, a VBD object, v, points to a virtual disk image object (VDI); the VDI object represents a virtual hard disk image that can be read/written from within the virtual machine 106b via the disk device corresponding to the VBD v. In still another of these embodiments, a VDI object points to a storage repository (SR) object that defines how the virtual disk image is represented as bits on some piece physical piece of storage. In still even another of these embodiments, an SR, s, is accessible to a physical machine 100b (which may be referred to as host machine, h), within a pool of physical resources, p, if there is a physical block device (PBD) object connecting the objects corresponding to s and h, and h is connected to an object representing the pool p. In still another of these embodiments, the fields of a PBD object may specify how a particular host can access the storage relating to a particular SR. In yet another of these embodiments, given the objections and relationships described above, to identify which physical hosts 100 can access a physical resource, such as a storage resources required to instantiate a virtual machine 106b, v, the management component identifies the VBDs associated with V, identifies the VDIs associated with these VBDs, identifies the SRs associated with these VDIs, identifies the PBDs associated with these SRs and then identifies the Hosts associated with these PBDs.

In other embodiments, in which the physical resource 260 is not a storage-related resource, the management component 104 may perform similar steps to identify types of objects that define the physical resource 260 and to determine whether a physical host has access to the physical network resources required to support a given virtual machine 106b. In one of these embodiments, and as another example, the objects involved represent networking resources rather than storage configuration. In another of these embodiments, to identify a physical machine 100b (host, h) capable of providing the virtual machine 106b with a physical resource 260, the management component 104 determines whether h falls into a set of hosts that can access all storage required by the virtual machine 106b (as above) and determines whether h falls into the set of hosts that can see all networks required by the virtual machine 106b. In still another of these embodiments, the management component 104 determines whether the host, h, has sufficient physical resources to begin execution of the virtual machine 106b; for example the management component 104 may determine whether h has enough physical RAM free to start the virtual machine 106b.

In still other embodiments, the management component 104 maintains at least one database of configuration objects and the relationships between them. In one of these embodiments, the management component 104 identifies second physical machine 100b in the second subset of the plurality of physical machines 100 by accessing one of these databases.

The hypervisor migrates the virtual machine to the second physical machine (308). In one embodiment, the hypervisor 101a receives an identification of the virtual machine 106b from the management component 104. In another embodiment, the hypervisor 101a receives an identification of the computing device 100b from the management component 104. In still another embodiment, the hypervisor 101a transmits, to a hypervisor 101b, the identification of the virtual machine 106b. In still even another embodiment, the hypervisor 101a transmits, to the hypervisor 101b, a memory image of the virtual machine 106b. In still another embodiment, the hypervisor 101a transmits, to the hypervisor 101b, an identification of a state of execution of the virtual machine 106b and data accessed by the executing virtual machine 106b. In yet another embodiment, the management component 104a and management component 104b communicate via the hypervisors 101a and 101b to complete the migration of the virtual machine.

Referring now to FIG. 7, a screen shot depicts one embodiment of a user interface displaying an identified physical machine 100b in the second subset of the plurality of physical machines. In one embodiment, the management component, executing within the control operating system 105 that itself executes within a virtual machine 106a, displays a user interface 702 to a user such as an administrator of the plurality of physical machines 100. In another embodiment, the user interface includes an enumeration 704 of physical machines. In still another embodiment, the management component 104 provides a user interface 706 through which a user may manage one or more of the enumerated physical and virtual machines. In still another embodiment, the user interface 706 provides an interface element with which the user may request migration of a virtual machine. As depicted in FIG. 7, the interface element may be a context menu. FIG. 7 also includes an interface element 708 displaying an identification of which physical machines are in the first subset of the plurality of physical machines and which are in the second subset. As shown in FIG. 7, "h13" refers to a machine such as computing device 100c which does not provide access to a physical resource 260, while "h09" and "h12" refer to machines such as the first computing device 100a and the second computing device 100b in the second subset of the plurality of physical machines. In some embodiments, and as shown in FIG. 7, the management component 104 may refuse requests to migrate a virtual machine to a physical machine in the first subset of the plurality of physical machines; for example, by disabling the interactive element associated with the physical machine 100c (in FIG. 7, by disabling a hyperlink associated with the text "h13"). In one of these embodiments, the management component 104 may display an explanation as to why a machine is part of the first subset instead of the second; for example, user interface element 708 displays an indication that "h13" does not have access to physical storage resources required by the virtual machine the user is attempting to migrate.

In some embodiments, the methods and systems described herein provide functionality facilitating the migration of virtual machines. In one of these embodiments, by determining whether a user is attempting to migrate a virtual machine to a physical machine that cannot provide access to a physical resource requested or required by the virtual machine, and by migrating the virtual machine only to one of a subset of a plurality of physical machines making that physical resource available, the methods and systems described herein provide improved migration functionality without requiring a homogeneous pool of physical machines.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs may be stored on or in one or more articles of manufacture as object code.

Having described certain embodiments of methods and systems for facilitating migration of virtual machines among a plurality of physical machines, it will now become apparent to one of skill in the art that other embodiments incorporating the concepts of the disclosure may be used. Therefore, the disclosure should not be limited to certain embodiments, but rather should be limited only by the scope of the following claims.

## Claims

1. A method for facilitating migration of virtual machines (106) among a plurality of physical machines (100), wherein the plurality of physical machines (100) comprises a first subset of the plurality of physical machines and a second subset of the plurality of physical machines, a virtual machine (106b) executing on a first physical machine (100a) in the second subset of the plurality of physical machines, and wherein at least one physical resource (260) is inaccessible by the first subset of the plurality of physical machines and is available to the second subset of the plurality of physical machines; the method comprising:
associating the second subset of the plurality of physical machines with the at least one physical resource (260);
associating (302) the virtual machine (106b) with the at least one physical resource (106b);
receiving (304) a request to migrate the virtual machine (106b) from the first physical machine (100a) in the second subset of the plurality of physical machines to a different physical machine (100c) in the first subset of the plurality of physical machines;
determining that the different physical machine (100c) in the first subset of the plurality of physical machines that was identified in the request does not provide access to the physical resource (260);
identifying (306), in response to determining that the different physical machine (100c) does not provide access to the physical resource (260), a second physical machine (100b) in the second subset of the plurality of physical machines; and
migrating (308) the virtual machine (106b) to the second physical machine (100b).

2. The method of claim 1, further comprising requesting permission to migrate the virtual machine to the second physical machine.

3. The method of claim 1, wherein the request identifies a virtual machine associated with at least one physical resource comprising a processor type.

4. The method of claim 1, wherein receiving further comprises receiving a request identifying a virtual machine associated with at least one physical resource comprising a network.

5. The method of claim 1, wherein receiving further comprises receiving a request identifying a virtual machine associated with at least one physical resource comprising a network storage device.

6. The method of claim 1, wherein receiving further comprises receiving a request identifying a virtual machine associated with at least one physical resource comprising a plurality of resources.

7. The method of claim 1, wherein the request to migrate the virtual machine comprises an identification of a migration event.

8. The method of claim 7, wherein the migration event comprises a software installation on the first physical machine.

9. The method of claim 7, wherein the migration event comprises a patch installation on the first physical machine.

10. A system for facilitating migration of virtual machines (106) among a plurality of physical machines (100) wherein the plurality of physical machines (100) comprises a first subset of the plurality of physical machines and a second subset of the plurality of physical machines, a virtual machine (106b) executing on a first physical machine (100a) in the second subset of the plurality of physical machines, and wherein at least one physical resource (260) is inaccessible by the first subset of the plurality of physical machines and is available to the second subset of the plurality of physical machines; the system comprising:
a management component (104) configured for:
i) associating the second subset of the plurality of physical machines with the at least one physical resource (260) and associating the virtual machine (106b) with at the least one physical resource (260),
ii) receiving a request to migrate the virtual machine (106b) from the first physical machine (100a) in the second subset of the plurality of physical machines to a different physical machine (100c) in the first subset of the plurality of physical machines,
iii) determining that the different physical machine (100c) in the first subset of the plurality of physical machines that was identified in the request does not provide access to the physical resource (260), and
iv) identifying, in response to determining that the different physical machine (100c) does not provide access to the physical resource (260), a second physical machine (100b) in the second subset of the plurality of physical machines; and
a hypervisor (101) configured for receiving, from the management component (104), an identification of the second physical machine (100b) and migrating the virtual machine (106b) to the second physical machine (100b).

11. The system of claim 10, wherein the management component further comprises a user interface configured for receiving the request to migrate the virtual machine to the different physical machine in the first subset of the plurality of physical machines and means for directing the hypervisor to migrate the virtual machine to the second physical machine in the second subset of the plurality of physical machines instead of the different physical machine in the first subset of the plurality of physical machines.

12. The system of claim 10, wherein the management component further comprises a user interface configured for receiving the request to migrate the virtual machine to the different physical machine in the first subset of the plurality of physical machines and means for identifying the second physical machine in the second subset of the plurality of physical machines and requesting permission to migrate the virtual machine to the second physical machine.

## Patentansprüche

1. Ein Verfahren zum Unterstützen der Migration virtueller Maschinen (106) zwischen einer Vielzahl von physischen Maschinen (100), wobei die Vielzahl von physischen Maschinen (100) einen ersten Teilsatz der Vielzahl von physischen Maschinen und einen zweiten Teilsatz der Vielzahl von physischen Maschinen beinhaltet, wobei eine virtuelle Maschine (106b) auf einer ersten physischen Maschine (100a) in dem zweiten Teilsatz der Vielzahl von physischen Maschinen läuft, und wobei mindestens eine physische Ressource (260) dem ersten Teilsatz der Vielzahl von physischen Maschinen nicht zugänglich ist und für den zweiten Teilsatz der Vielzahl von physischen Maschinen verfügbar ist; wobei das Verfahren Folgendes beinhaltet:
In-Verbindung-Bringen des zweiten Teilsatzes der Vielzahl von physischen Maschinen mit der mindestens einen physischen Ressource (260);
In-Verbindung-Bringen (302) der virtuellen Maschine (106b) mit der mindestens einen physischen Ressource (106b);
Empfangen (304) einer Anforderung zur Migration der virtuellen Maschine (106b) von der ersten physischen Maschine (100a) in dem zweiten Teilsatz der Vielzahl von physischen Maschinen zu einer anderen physischen Maschine (100c) in dem ersten Teilsatz der Vielzahl von physischen Maschinen;
Bestimmen, dass die andere physische Maschine (100c) in dem ersten Teilsatz der Vielzahl von physischen Maschinen, die in der Anforderung identifiziert wurde, keinen Zugang zu der physischen Ressource (260) gewährt;
Identifizieren (306), als Antwort auf das Bestimmen, dass die andere physische Maschine (100c) keinen Zugang zu der physischen Ressource (260) gewährt, einer zweiten physischen Maschine (100b) in dem zweiten Teilsatz der Vielzahl von physischen Maschinen; und
Migrieren (308) der virtuellen Maschine (106b) zu der zweiten physischen Maschine (100b).

2. Verfahren gemäß Anspruch 1, das ferner das Anfordern einer Erlaubnis zur Migration der virtuellen Maschine zu der zweiten physischen Maschine beinhaltet.

3. Verfahren gemäß Anspruch 1, wobei die Anforderung eine virtuelle Maschine identifiziert, die mit mindestens einer physischen Ressource, die einen Prozessortyp beinhaltet, in Verbindung steht.

4. Verfahren gemäß Anspruch 1, wobei das Empfangen ferner das Empfangen einer Anforderung beinhaltet, die eine virtuelle Maschine identifiziert, die mit mindestens einer physischen Ressource, die ein Netzwerk beinhaltet, in Verbindung steht.

5. Verfahren gemäß Anspruch 1, wobei das Empfangen ferner das Empfangen einer Anforderung beinhaltet, die eine virtuelle Maschine identifiziert, die mit mindestens einer physischen Ressource, die eine Netzwerkspeichervorrichtung beinhaltet, in Verbindung steht.

6. Verfahren gemäß Anspruch 1, wobei das Empfangen ferner das Empfangen einer Anforderung beinhaltet, die eine virtuelle Maschine identifiziert, die mit mindestens einer physischen Ressource, die ein Vielzahl von Ressourcen beinhaltet, in Verbindung steht.

7. Verfahren gemäß Anspruch 1, wobei die Anforderung zur Migration der virtuellen Maschine eine Identifikation eines Migrationsereignisses beinhaltet.

8. Verfahren gemäß Anspruch 7, wobei das Migrationsereignis eine Softwareinstallation auf der ersten physischen Maschine beinhaltet.

9. Verfahren gemäß Anspruch 7, wobei das Migrationsereignis eine Patchinstallation auf der ersten physischen Maschine beinhaltet.

10. Ein System zum Unterstützen der Migration virtueller Maschinen (106) zwischen einer Vielzahl von physischen Maschinen (100), wobei die Vielzahl von physischen Maschinen (100) einen ersten Teilsatz der Vielzahl von physischen Maschinen und einen zweiten Teilsatz der Vielzahl von physischen Maschinen beinhaltet, wobei eine virtuelle Maschine (106b) auf einer ersten physischen Maschine (100a) in dem zweiten Teilsatz der Vielzahl von physischen Maschinen läuft, und wobei mindestens eine physische Ressource (260) dem ersten Teilsatz der Vielzahl von physischen Maschinen nicht zugänglich ist und für den zweiten Teilsatz der Vielzahl von physischen Maschinen verfügbar ist; wobei das System Folgendes beinhaltet:
eine Verwaltungskomponente (104), die für Folgendes konfiguriert ist:
i) In-Verbindung-Bringen des zweiten Teilsatzes der Vielzahl von physischen Maschinen mit der mindestens einen physischen Ressource (260) und In-Verbindung-Bringen der virtuellen Maschine (106b) mit der mindestens einen physischen Ressource (260),
ii) Empfangen einer Anforderung zur Migration der virtuellen Maschine (106b) von der ersten physischen Maschine (100a) in dem zweiten Teilsatz der Vielzahl von physischen Maschinen zu einer anderen physischen Maschine (100c) in dem ersten Teilsatz der Vielzahl von physischen Maschinen,
iii) Bestimmen, dass die andere physische Maschine (100c) in dem ersten Teilsatz der Vielzahl von physischen Maschinen, die in der Anforderung identifiziert wurde, keinen Zugang zu der physischen Ressource (260) gewährt, und
iv) Identifizieren, als Antwort auf das Bestimmen, dass die andere physische Maschine (100c) keinen Zugang zu der physischen Ressource (260) gewährt, einer zweiten physischen Maschine (100b) in dem zweiten Teilsatz der Vielzahl von physischen Maschinen; und
einen Hypervisor (101), der zum Empfangen, von der Verwaltungskomponente (104), einer Identifikation der zweiten physischen Maschine (100b) und zum Migrieren der virtuellen Maschine (106b) zu der zweiten physischen Maschine (100b) konfiguriert ist.

11. System gemäß Anspruch 10, wobei die Verwaltungskomponente ferner eine Benutzeroberfläche, die zum Empfangen der Anforderung zur Migration der virtuellen Maschine zu der anderen physischen Maschine in dem ersten Teilsatz der Vielzahl von physischen Maschinen konfiguriert ist, und ein Mittel zum Anweisen des Hypervisors zur Migration der virtuellen Maschine zu der zweiten physischen Maschine in dem zweiten Teilsatz der Vielzahl von physischen Maschinen anstatt zu der anderen physischen Maschine in dem ersten Teilsatz der Vielzahl von physischen Maschinen beinhaltet.

12. System gemäß Anspruch 10, wobei die Verwaltungskomponente ferner eine Benutzeroberfläche, die zum Empfangen der Anforderung zur Migration der virtuellen Maschine zu der anderen physischen Maschine in dem ersten Teilsatz der Vielzahl von physischen Maschinen konfiguriert ist, und ein Mittel zum Identifizieren der zweiten physischen Maschine in dem zweiten Teilsatz der Vielzahl von physischen Maschinen und zum Anfordern einer Erlaubnis zur Migration der virtuellen Maschine zu der zweiten physischen Maschine beinhaltet.

## Revendications

1. Un procédé pour faciliter la migration de machines virtuelles (106) parmi une pluralité de machines physiques (100), dans lequel la pluralité de machines physiques (100) comprend un premier sous-ensemble de la pluralité de machines physiques et un deuxième sous-ensemble de la pluralité de machines physiques, une machine virtuelle (106b) s'exécutant sur une première machine physique (100a) dans le deuxième sous-ensemble de la pluralité de machines physiques, et dans lequel au moins une ressource physique (260) est inaccessible au premier sous-ensemble de la pluralité de machines physiques et est disponible pour le deuxième sous-ensemble de la pluralité de machines physiques ; le procédé comprenant :
l'association du deuxième sous-ensemble de la pluralité de machines physiques à l'au moins une ressource physique (260) ;
l'association (302) de la machine virtuelle (106b) à l'au moins une ressource physique (106b) ;
la réception (304) d'une demande de faire migrer la machine virtuelle (106b) de la première machine physique (100a) dans le deuxième sous-ensemble de la pluralité de machines physiques vers une machine physique différente (100c) dans le premier sous-ensemble de la pluralité de machines physiques ;
la détermination du fait que la machine physique différente (100c) dans le premier sous-ensemble de la pluralité de machines physiques qui a été identifiée dans la demande ne fournit pas d'accès à la ressource physique (260) ;
l'identification (306), en réponse à la détermination du fait que la machine physique différente (100c) ne fournit pas d'accès à la ressource physique (260), d'une deuxième machine physique (100b) dans le deuxième sous-ensemble de la pluralité de machines physiques ; et
la migration (308) de la machine virtuelle (106b) vers la deuxième machine physique (100b).

2. Le procédé de la revendication 1, comprenant en outre la demande de permission de faire migrer la machine virtuelle vers la deuxième machine physique.

3. Le procédé de la revendication 1, dans lequel la demande identifie une machine virtuelle associée à au moins une ressource physique comprenant un type de processeur.

4. Le procédé de la revendication 1, dans lequel la réception comprend en outre la réception d'une demande identifiant une machine virtuelle associée à au moins une ressource physique comprenant un réseau.

5. Le procédé de la revendication 1, dans lequel la réception comprend en outre la réception d'une demande identifiant une machine virtuelle associée à au moins une ressource physique comprenant un dispositif de stockage de réseau.

6. Le procédé de la revendication 1, dans lequel la réception comprend en outre la réception d'une demande identifiant une machine virtuelle associée à au moins une ressource physique comprenant une pluralité de ressources.

7. Le procédé de la revendication 1, dans lequel la demande de faire migrer la machine virtuelle comprend une identification d'un événement de migration.

8. Le procédé de la revendication 7, dans lequel l'événement de migration comprend une installation de logiciel sur la première machine physique.

9. Le procédé de la revendication 7, dans lequel l'événement de migration comprend une installation de correctif sur la première machine physique.

10. Un système pour faciliter la migration de machines virtuelles (106) parmi une pluralité de machines physiques (100) dans lequel la pluralité de machines physiques (100) comprend un premier sous-ensemble de la pluralité de machines physiques et un deuxième sous-ensemble de la pluralité de machines physiques, une machine virtuelle (106b) s'exécutant sur une première machine physique (100a) dans le deuxième sous-ensemble de la pluralité de machines physiques, et dans lequel au moins une ressource physique (260) est inaccessible au premier sous-ensemble de la pluralité de machines physiques et est disponible pour le deuxième sous-ensemble de la pluralité de machines physiques ; le système comprenant :
un composant de gestion (104) configuré pour :
i) l'association du deuxième sous-ensemble de la pluralité de machines physiques à l'au moins une ressource physique (260) et l'association de la machine virtuelle (106b) à l'au moins une ressource physique (260),
ii) la réception d'une demande de faire migrer la machine virtuelle (106b) de la première machine physique (100a) dans le deuxième sous-ensemble de la pluralité de machines physiques vers une machine physique différente (100c) dans le premier sous-ensemble de la pluralité de machines physiques,
iii) la détermination du fait que la machine physique différente (100c) dans le premier sous-ensemble de la pluralité de machines physiques qui a été identifiée dans la demande ne fournit pas d'accès à la ressource physique (260), et
iv) l'identification, en réponse à la détermination du fait que la machine physique différente (100c) ne fournit pas d'accès à la ressource physique (260), d'une deuxième machine physique (100b) dans le deuxième sous-ensemble de la pluralité de machines physiques ; et
un hyperviseur (101) configuré pour recevoir, de la part du composant de gestion (104), une identification de la deuxième machine physique (100b) et faire migrer la machine virtuelle (106b) vers la deuxième machine physique (100b).

11. Le système de la revendication 10, dans lequel le composant de gestion comprend en outre une interface utilisateur configurée pour recevoir la demande de faire migrer la machine virtuelle vers la machine physique différente dans le premier sous-ensemble de la pluralité de machines physiques et des moyens pour diriger l'hyperviseur afin qu'il fasse migrer la machine virtuelle vers la deuxième machine physique dans le deuxième sous-ensemble de la pluralité de machines physiques au lieu de la machine physique différente dans le premier sous-ensemble de la pluralité de machines physiques.

12. Le système de la revendication 10, dans lequel le composant de gestion comprend en outre une interface utilisateur configurée pour recevoir la demande de faire migrer la machine virtuelle vers la machine physique différente dans le premier sous-ensemble de la pluralité de machines physiques et des moyens pour identifier la deuxième machine physique dans le deuxième sous-ensemble de la pluralité de machines physiques et demander la permission de faire migrer la machine virtuelle vers la deuxième machine physique.
